# EUROPEAN PATENT APPLICATION

(11) **EP 0 775 908 A1**
(43) Date of publication of application: **28.05.1997**
(21) Application number: 95308307.8
(22) Date of filing: 21.11.1995
(51) Int. Cl.: G01N 21/64, G01N 33/58

(54) **Fluorescence quantization**

(71) Applicant: ADVANCED BIOLOGICAL PRODUCTS INC., Mississauga, Ontario L4W 4L6 (CA)
(72) Inventor: Sinka, Steve L., Springdale, Pennsylvania 15144 (US)
(74) Representative: BROOKES & MARTIN

(57) **Abstract**

A method for quantizing target phenomena capable of being detected by fluorescence, including Anti Nuclear Antibody samples, using a microscope, a fluorescence exciting light source, and variable optical attenuation of the light source. A prepared sample of the target phenomena is examined; fluorescence is detected; the attenuation means is adjusted in discrete steps until the fluorescence is no longer detectable; a first numerical readout of the amount of attenuation is displayed on a digital readout and entered into memory; control samples are examined in an identical manner to obtain a standardization curve; and the standardization curve is used to normalize the first readout. In addition, the fineness of attenuation steps is under operator control. This highly accurate system, which has been succinctly described as quantizing the dilution of the light instead of the dilution of the sample, allows the current serial sample dilution method to be dispensed with.

## Description

### INTRODUCTION AND DESCRIPTION OF THE PRIOR ART

The present invention relates to the quantizing of phenomena observed by means of a fluorescent microscope, and more particularly to IFA (Immuno Fluorescent Assay) procedure IFA is commonly used as a screening for immune reactions, typically in which the immune system produces a specific antibody/antigen to an invading antigen/antibody or to host tissue (for instance, in auto-immune diseases, viroiogy, and so on.) ELISA's(Enzyme Linked Immunosorbent Assays) are often used to give more detailed and reliable information, but these are expensive, and hence the IFA is often chosen as an screening tool.

However the IFA procedure has changed little in thirty years: in particular the ANA (Anti Nuclear Antibody) fluorescent assay is a well-established testing method used by various areas of diagnostic medicine: immunology, virology, toxicology, and so forth. The aim of the ANA is to detect the relative concentration of specific antibodies in patient blood, which are indicative of a specific disease state. The test detects these antibodies by reacting them with specially prepared cells (HEP-2 type) attached to a glass slide(known as an ANA slide). The current steps in the existing method are as follows:

### Step A: Positive/Negative for Reaction:

1. Patient serum is separated from patient blood cells in a centrifuge.
2. The serum is diluted with an assay diluent (a proprierary solution that maximizes the specific detectability of the targeted antibody).
3. Diluted serum is added to an ANA slide, where antibodies in the serum will react with HEP-2 cells.
4. Cells are stained with a fluorescent reagent.
5. Patterns of antibodies are observed through a fluorescent microscope.

If the test produces a positive result, and the physician requires a quantified result, the technician performs step B:

### Step B: Quantitative Test:

The above steps 1 - 5 are repeated with the same patient's serum, but as a series of serial dilutions. More particularly, steps 3, 4, and 5 above are repeated, commonly five or six times in a row, until no fluorescence is observed. The number of dilutions is a relative indicator of the concentration of antibodies in the patient's serum; the higher the number of dilutions required, the higher the concentration of the antibody in the original serum.

A typical run for Step A would be for 50 samples and take five hours; a typical test run for Step B would be for 50 samples and take eight hours.

Serious drawbacks include the time and expense, and also the variability in the technician's decision as to what constitutes a positive result in Step A; repeatability between technicians, on different equipment, and even with the same technician on different days or even hour to hour has been shown to be relatively poor. But up to this point, no better alternative has existed.

The present invention provides a dramatic improvement in Step A that allows Step B to be totally dispensed with. Uniform fluorescence attenuation in discrete steps; control standards; and data correction curve, together produce a normalized numerical value that is much more independent of personal evaluation, while still retaining the use of a human technician whose skill in searching among patterns on the screen may be invaluable in detecting formations in the fluorescence. And this numerical value, at the discretion of the technician, can represent either the fluorescence of the whole screen or of a small portion, such as a DNA strand area or an individual cell among other cells. The cost savings are enormous, since Step A will continue to take the same amount of technician time and all the technician time and reagent costs of Step B are dispensed with. And the quantitative results are more consistent and accurate than with the prior art system.

In the current competitive medical technology market nothing close to the present invention exists, which is a good indication of its innovative quality U .S. patent # 4,573,195, (de France, 1986) discloses a fully automated system that quantizes by separation of light into different colors; this is probably a more expensive and complex system than the present invention, and suffers the drawbacks of loss of the technician's pattern recognition of portions of the slide and presumably, of ability to assign a quantization to portions of the slide rather than the whole.

In sum, the present invention involves the following:
Fixed Equipment (installed before any testing):
   a variable density optical filter providing discrete steps of uniform attenuation across the aperture between the fluorescent light source and the microscope.
   a microprocessor-driven control unit, with a digital numerical readout, communicating electrically with the attenuating filter.
Testing Procedure:
   1 - 5: These steps are identical to the current system itemized above: 1) serum obtained; 2) diluent added; 3) diluted serum placed on ANA slide; 4) sample stained with fluorescent reagent; 5) sample observed by technician through fluorescent microscope.
   6. Technician adjusts a convenient control, attenuating to the nearest gradation at which the fluorescence of any desired viewed portion of the slide disappears.
   7. Technician presses a lock button which records the result to a memory bank.
   8. With each run of slides, a control slide bearing several control phenomena is viewed and each control phenomena is similarly quantized.
   9. The standard curve resulting from the control viewing is used to normalize the score of the sample slide, thereby removing the variability in technician, lighting ,filter, and slide preparation.

Although the present invention apparently involves more actions than Step A of the current technology, it will be appreciated that number 6 takes but a few seconds, 7 is instantaneous, 8 is characteristically done once for a run of 50 slides, and 9 can be done automatically by computer, or, if manually, later with a group calculation. Thus the effective addition of time to Step A is nil; and the result is more accurate. (And, as noted, Step B is totally eliminated.)

An object of the invention is to provide a method for quantizing target phenomena capable of being detected by fluorescence; the method uses a fluorescent microscope; a fluorescence exciting light source feeding into the microscope; variable optical attenuation means intercepting the exciting light source prior to the microscope; adjustment means of the degree of attenuation; automatic quantification means measuring the degree of attenuation; automatic numerical readout means displaying the degree of attenuation; and standard control phenomena similar to the target phenomena. The method comprises the steps of: (a) visually examining a prepared sample of the target phenomena through the fluorescent microscope; (b) detecting fluorescence; (c) adjusting the attenuation mans until the fluorescence is no longer detectable; (d) recording a first numerical result from the readout means; (e) examining the fluorescence emitted from the control phenomena in a manner essentially identical to that just recited for the target phenomena and obtaining a resultant numerical standardization curve; and (f) using the standardization curve to normalize the first result. Optionally, the attenuation is adjusted and measured and displayed along a scale of discrete steps as opposed to a continuous scale. The control phenomena may be examined before the target sample and the normalization performed automatically before the degree of attenuation is displayed. The target phenomena may be antigen, antibody, or other element in an Immuno Fluorescent Assay. The target phenomena may be an industry-standard Anti Nuclear Antibody slide prepared according to industry-standard means. The method may also include a step in which optionally an area of the sample is chosen to attenuate, such as a single cell among a group of cells, or a nucleus within a cell, and a readout is obtained corresponding to the fluorescence of this area. The attenuation means may comprise an attenuation filter attenuating 0% to 100% uniformly across the exciting light source; and the attenuation means may comprise a pair of optical wedge filters.

It is a further object of the invention to provide such a method for quantizing fluorescence emitted from a target Anti Nuclear Antibody slide bearing HEP-2 cells utilizing the following elements:
(a) a fluorescent microscope selected from the group manufactured by: Nikon™, Leitz™, Zeiss™, American Optical Co.™, Bausch and Lomb™; (b) a fluorescent exciting light source feeding into the microscope; (c) a variable optical attenuator intercepting the exciting light source prior to the microscope; the attenuator comprising: dual adjustable variable density filters traversing in opposing directions to provide a uniform attenuation across the exciting light path with the filters operating over the wavelength of 360 to 500nm, and electronic stepper motor and belt drive mechanism to move the filters; (d) a control unit comprising: microprocessor circuitry providing for filter motion in discrete steps and repeatable positional control, electronic display providing numerical readout of the filter positional information, and retrievable memory of the numerical readout; (e) an adjustment pad comprising: filter control switch electrically communicating with the microprocessor circuitry to provide positional filter control, reset switch to move filters back to minimum optical attenuation position from any filter position, and a lock button electrically communicating with the filter positional information in the control unit and with the retrievable memory; and (f) a standardized control Anti Nuclear Antibody slide bearing control phenomena of known fluorescence. Optionally, in this method the microprocessor circuitry may provide for a choice of the fineness of the discrete steps of the attenuation, and further the attenuation control switch may additionally comprise a switch for making the choice; and further the choice may be made from the group containing at least: 5; 10; and 20 steps when the attenuation is not computer-controlled; and from the group containing at least: 5; 10; 20; and 100 steps when the attenuation is computer-controlled.

### DETAILED DESCRIPTION OF THE INVENTION

For this description refer to the following diagrams, wherein like numerals refer to like parts:
Figure 1, a schematic of the invented system;
Figure 2A, unattenuated through-microscope view using the invented system;
Figure 2B, controller readout corresponding to Figure 2A;
Figure 3A, as in Figure 2A but partially attenuated;
Figure 3B, controller readout corresponding to Figure 3A;
Figure 4A, as in Figure 3A, but further attenuated; and
Figure 4B, controller readout corresponding to Figure 4A.

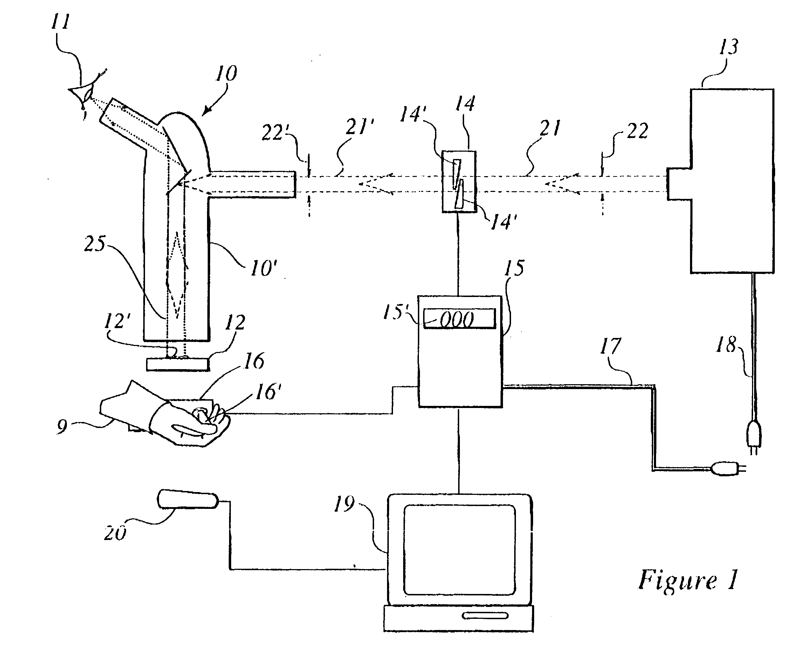

The essential elements of the invention can be explained with reference to Figure 1, which is a schematic of the light and information paths. The components include fluorescent microscope generally indicated as 10, technician's eye 11, sample plate 12 bearing target phenomena 12', exciting light source 13, variable optical attenuator 14, controller 15, adjustment pad 16, power circuits 17 and 18, and optionally personal computer 19 with optional mouse 20.

Most elements in Figure 1 are, in themselves, self-explanatory, although it might be noted for those unfamiliar with image attenuation that a variable optical attenuation system such as 14 is known and can be engineered in several forms, including reflection (see U.S. #4,925,273, Maisenbacher et al, 1990); absorption (U.S. #5,204,77, Guida, 1993); and dual wedge filtering, which is employed in the embodiment being described herein, where the dual wedges are schematically represented as 14'. (An excellent description of similar dual wedge filtering is given in U.S. #4,057,724, Adrian et al, 1977, col. 4, lines 33-53). An essential feature of the dual wedge filtering being employed (not diagrammed, but can be assumed as a construction specification) is that it attenuates the exciting light 21 evenly across the entire width 22 of beam 21. Thus exciting light 21 is attenuated into attenuated exciting light 21', which nonetheless is still evenly distributed across width 22'. It might also be noted that the wedge filter presently employed has been engineered to adapt to microscopes made by diverse manufacturers, including Nikon™, Leitz™, Zeiss™, American Optical Co.™, and Bausch and Lomb™.

The system operates as follows: with generally accepted laboratory techniques sample 12' is prepared and placed onto slide 12 and set into the position in Figure 1, ready to be viewed through fluorescent microscope 10. (In general, this sample 12 may be of a variety of materials, but must either include the addition of a fluorescent reagent, or that the sample materials are themselves intrinsically fluorescent. In this example, assume that the sample is an industry standard ANA (Anti Nucleic Antibody) slide, to which human sera has been added; the sera had been separated by centrifuge and a proprietary diluent has been added; then a fluorescent reagent. These are current technology and will not be further detailed here.)

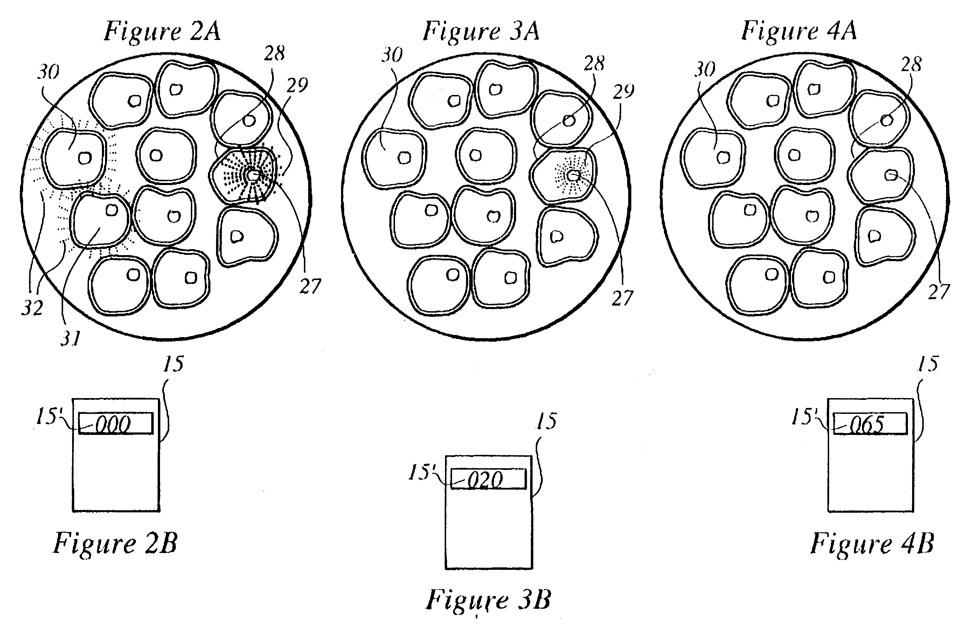

Exciting light source 13 is providing exciting light 21 which travels through attenuator 14 to become attenuated exciting light 21', and then through microscope body 10'. Fluorescent 25 emitted from sample 12' travels up to eye 11, thus affording the view in Figure 2A. where, in this example the nucleus 27 of cell 28 is seen to be fluorescing 29: more brightly than cells 30 and 31, which are nonetheless also fluorescing 32. At this point no attenuation of light 21 is occurring, so control readout 15' on Figure 2B shows "000". Now, with reference to Figure 1, technician 9 moves lever 16' on adjustment pad 16, sending an electrical signal to controller 15 and therethrough to attenuator 14, where electric motors (not shown) move filter wedges 14' a discrete amount, and attenuate exciting light 21 into exciting light 21'. In this example attenuation is occurring over the wavelength of 360 to 500nm, which is appropriate for the fluorescent reagents commonly employed for Immuno Fluorescent Assay.

The technician continues to move lever 16' to attenuate further in discrete steps until emitted fluorescence is seen as in Figure 3A. Cells 30 and 31 show no fluorescence, and the technician 9 in Figure 1 can optionally press a lock button (not shown) on adjustment pad 16, recording a first number from controller 15, shown in Figure 3B as "020", into a controller resident memory (not shown) or into a computer memory in computer 19 (which is shown on Figure 1). The technician 9 in Figure 1 could also be controlling attenuator 14 by means of mouse 20 or other input, such as voice, (not shown) into computer 19, or a button or other switch (not shown) instead of a lever 16'. If desired, in the example the technician can further attenuate until fluorescence 29, shown reduced in intensity in Figure 3A, disappears completely as shown in Figure 4A; and can record a second number from controller 15, as illustrated in Figure 4B as "065", corresponding to this disappearance. Afterwards the technician 9 in Figure 1 may press a reset button (not shown) on the adjustment pad 16 which will reset the attenuation to the zero position (from any filter position.) As mentioned, this is the position in Figures 2A and 2B.

Once a set of such samples has been completed a slide of standardized control samples, characteristically bearing six samples, each of whose rate of fluorescence emission is known, is examined; attenuation performed; and the numbers recorded in the same manner. Later these numbers are used as a standardization curve to adjust all the sample readings, so that operator variability, light intensity fluctuations, and sample and filtering variation influences are all removed from the final quantification number. (Multiple sample examination, control examination, and control numerical adjustment are not shown diagrammatically).

Optionally (and presently undergoing field trials), one or more standard slides are viewed before the samples, and the normalization calculation is performed automatically as the sample slides are attenuated to fluorescence disappearance; so the number appearing (for instance on Figure 4B, "065") would already be the corrected quantification of the fluorescence shown as 29 emitted from the nucleus 27 in Figure 3A.

As an aside, it might be noted that a further refinement made possible by the invention is to correct for the gradual adjustment of a technician's eyes to viewing fluorescence in the dark, which has been found to cause the technician's readings to drift predictably over time. This correction can be partly done by re-doing the control sample viewing more frequently, and additionally by computer-assisted correction of such drift during automatic computer calculation of the adjusted values.

In current technology (not shown) technicians dilute the samples and then estimate a fluorescence as "0", "+1", "+2", "+3" and so forth; and an error of ±1 gradation is accepted; so that if three technicians view the same sample and the first estimates the fluorescence as "+2", the second as "+1", and the third as "+3", the sample is taken as representing a "+2" intensity of fluorescence. The present invention improves on this greatly. Even in the simplest form of the invention, such as that using adjustment pad 16 in Figure 1, the operator has a switch (not shown) that gives a choice of the number of discrete steps that the attenuation, and hence attenuation readout 15', is divided into: these being, characteristically, readouts of 0-20-40-60-80-100 (5 steps), 0-10-20-30 etc., (10 steps), and 0-5-10-15 etc., (20 steps, as shown in the illustrations herein). The gradation used can depend on several factors including the technician's preference, skill, and acuity, the type of sample, and the viewing conditions. In the example of an ANA slide with a skilled technician, the 20 steps is often appropriate. This compares with roughly five steps in the current art. However, not only is the gradation finer (and can be set at a higher number of steps, say 100, if computer control is used), the repeatability is improved: due to the separation of the viewing into discrete comparisons a 95% repeat-rate has been obtained. This improvement rests partly on the fact that the human eye adapts to continuous change, so that it does not note fine differences while such change is occurring. Just like an optometrist flashing different lenses before a patient's eye and saying, 'Any better? No better?', the present invention allows a small discrete difference to be compared with a previous. Thus in characteristic use, such as the example in the illustrations herein, the improvement of the present system may be as much as an, order of magnitude increase in accuracy over the prior art system.

As well, many other improvements are undergoing testing or are already in use, including: an off position that moves the attenuation filter such as 14' in Figure 1 completely out of the exciting light path 21 so that at the option of the user, the microscope 10 is left to function as a completely unmodified ultra-violet microscope; a standard hardware hook-up for personal computer; computer software to execute the control commands and to read the control display readout; and certification for use in hospital laboratory environments in a wide range of temperature and humidity. (Only the first-listed improvement is diagrammed).

The foregoing is by example only, and the scope of the invention should be limited only by the appended claims.

The following numbered paragraphs set out features of some of the embodiments of the invention.
1. A method for quantizing target phenomena capable of being detected by fluorescence; said method utilizing:
   a fluorescent microscope;
   a fluorescence exciting light source feeding into said microscope;
   variable optical attenuation means intercepting the exciting light source prior to the microscope;
   adjustment means of the degree of attenuation;
   automatic quantification means measuring the degrees of attenuation;
   automatic numerical readout means displaying the degree of attenuation; and
   standard control phenomena similar to the target phenomena;
   said method comprising the steps of:
   visually examining a prepared sample of the target phenomena through the fluorescent microscope;
   detecting fluorescence;
   adjusting the attenuation means until the fluorescence is no longer detectable;
   recording a first numerical result from the readout means;
   examining the fluorescence emitted from the control phenomena in a manner essentially identical to that just recited for the target phenomena and obtaining therefrom a resultant numerical standardization curve; and
   using the standardization curve to normalize the first result.
2. A method as in paragraph 1, in which the attenuation is adjusted and measured and displayed along a scale of discrete steps as opposed to a continuous scale.
3. A method as in paragraph 1, in which the control phenomena are examined before the target sample, and in which the normalization is performed automatically before the degree of attenuation is displayed.
4. A method as in paragraph 1, in which the normalization is performed automatically.
5. A method as in paragraph 1, in which the target phenomena is antigen antibody, or other element in an Immuno Fluorescent Assay.
6. A method as in paragraph 1, in which the target phenomena is an industry-standard Anti Nuclear Antibody slide prepared according to industry-standard means.
7. A method as in paragraph 6, in which optionally an area of the sample is chosen to attenuate, such as a single cell among a group of cells, or a nucleus within a cell, and a readout is obtained corresponding to the fluorescence of said area.
8. A method as in paragraph 1, in which the attenuation means comprises an attenuation filter attenuating 0% to 100% uniformly across the exciting light source.
9. A method as in paragraph 8, in which the attenuation means comprises a pair of optical wedge filters.
10. A simplified and improved method of quantizing fluorescence emitted from a target sample, including an Immuno Fluorescent Assay sample, utilizing:
   a fluorescent microscope;
   a fluorescent exciting light source feeding into said microscope;
   a variable optical attenuator intercepting the exciting light source over the wavelength of 360 to 500 nm prior to the microscope;
   a control unit comprising:
      microprocessor circuitry providing for discrete steps of the degree of attenuation, and for repeatable control of the degree of attenuation;
      automatic display providing numerical readout of the degree of attenuation; and
      retrievable memory of the numerical readout;
      an adjustment pad comprising:
         attenuator control switch;
         reset switch; and
         lock button; and
         a standardized control slide bearing a plurality of control phenomena of known fluorescence;
   said method comprising the steps of:
   preparing the target slide by industry standard means;
   visually examining the target slide through the microscope;
   adjusting the attenuator control switch until fluorescence of a portion of the slide disappears;
   pressing the lock button to place the readout in memory;
   optionally pressing the reset switch to remove the attenuation;
   optionally repeating the above steps with a plurality of target slides;
   repeating the appropriate portions of this method to measure the fluorescence of each of the phenomena on the standardized control slide, that is: visually examining; adjusting the attenuator; and pressing the lock button;
   using said standardized fluorescence readouts to normalize the numerical readout of each target slide.
11. A method as in paragraph 10, in which the microprocessor circuitry provides for a choice of the fineness of the discrete steps of the attenuation, and further in which the attenuation control switch comprises a switch for making said choice.
12. A method as in paragraph 10, in which after the lock button is pressed, the attenuator control switch is adjusted until fluorescence of a different portion of the slide disappears, and further in which the lock button is then pressed again to place an additional readout in memory.
13. A method as in paragraph 10, in which the attenuator provides uniform attenuation across the exciting light path.
14. A method as in paragraph 10, in which the attenuator is a pair of adjustable variable density wedge filters.
15. A method as in paragraph 10, in which the microscope is selected from the group manufactured by Nikon™, Leitz™, Zeiss™m American Optical™, and Bausch and Lomb™.
16. A method as in paragraph 10, in which the target and control slides are Anti Nuclear Antibody slides bearing HEP-2 cells.
17. A method as in paragraph 10, in which the control slide, or a series of control slides, is examined before the target slides and the normalization is performed automatically and incorporated in the numerical readouts for each target slide.
18. A simplified and improved method for quantizing fluorescence emitted from a target Anti Nuclear Antibody slide bearing HEP-2 cells utilizing;
   a fluorescent microscope selected from the group manufactured by Nikon™, Leitz™, Zeiss™, American Optical™, and Bausch and Lomb™.
   a fluorescent exicting light source feeding into said microscope;
   a variable optical attenuator intercepting the exciting light source prior to the microscope; said attenuator comprising:
      dual adjustable variable density filters traversing in opposing direction to provide a uniform attenuation across the exciting light path; said filters operating over the wavelength of 360 to 500 nm;
      electronic stepper motor and belt drive mechanism to move said filters;
      a control unit comprising:
         microprocessor circuitry providing for filter motion in discrete steps and repeatable positional control;
         electronic display providing numerical readout of the filter positional information; and
         retrievable memory of the numerical readout;
         an adjustment pad comprising:
            filter control switch electrically communicating with said microprocessor circuitry to provide positional filter control;
            reset switch to move filters back to minimum optical attenuation position from any filter position; and
            a lock button electrically communicating with the filter positional information in the control unit and with the retrievable memory; and
            a standardized control Anti Nuclear Antibody slide bearing control phenomena of known fluorescence;
   said method comprising the steps of:
   preparing the target slide by industry standard means;
   visually examining the target slide through the microscope;
   adjusting the filter control switch until fluorescence of a portion of the slide disappears;
   pressing the lock button to place the readout in memory;
   optionally adjusting the filter control switch until fluorescence of a different portion of the slide disappears and pressing the lock button to place a different readout in memory;
   optionally pressing the reset switch to remove the filters;
   optionally repeating the above steps with a plurality of target slides;
   repeating the above steps with each of the phenomena on the standardized control slide;
   using the numerical readout said control slide phenomena to obtain a a numerical standardization curve;
   using said curve to normalize the numerical readout of each target slide.
19. A method as in paragraph 18, in which the phenomena are examined before the target slides, and the normalization is performed automatically and incorporated in the numerical readouts of each target slide.
20. A method as in paragraph 18, in which the microprocessor circuitry provides for a choice of the fineness of the discrete steps of the attenuation, and further in which the attenuation control switch additionally comprises a switch for making said choice; and further in which said choice of the fineness of the discrete steps of the attenuation, and further in which the attenuation control switch additionally comprises a switch for mailing said choice; and further in which said choice is made from the group containing at least 5; 10; and 20 steps when the attenuation is not computer-controlled; and from the group containing at least 5; 10; 20; and 100 steps when the attenuation is computer-controlled.

## Claims

1. A method for quantizing target phenomena capable of being detected by fluorescence; for example an antigen, antibody or other element in an Immuno Fluorescent Assay said method utilizing:
a fluorescent microscope;
a fluorescence exciting light source feeding into said microscope; variable optical attenuation means intercepting the exciting light source prior to the microscope;
adjustment means of the degree of attenuation;
automatic quantification means measuring the degrees of attenuation;
automatic numerical readout means displaying the degree of attenuation; and
standard control phenomena similar to the target phenomena;
said method comprising the steps of:
visually examining a prepared sample of the target phenomena through the fluorescent microscope;
detecting fluorescence;
adjusting the attenuation means until the fluorescence is no longer detectable;
recording a first numerical result from the readout means;
examining the fluorescence emitted from the control phenomena in a manner essentially identical to that just recited for the target phenomena and obtaining therefrom a resultant numerical standardization curve; and
using the standardization curve to normalize the first result.

2. A method as claimed in claim 1, in which the attenuation is adjusted and measured and displayed along a scale of discrete steps as opposed to a continuous scale.

3. A method as claimed in claim 1, in which the control phenomena are examined before the target sample, and in which the normalization is performed automatically before the degree of attenuation is displayed.

4. A method as claimed in claim 1, in which the normalization is performed automatically.

5. A method as claimed in claim 1, in which the target phenomena is an industry-standard Anti Nuclear Antibody slide prepared according to industry-standard means and in which optionally an area of the sample is chosen to attenuate, such as a single cell among a group of cells, or a nucleus within a cell, and a readout is obtained corresponding to the fluorescence of said area.

6. A method as claimed in claim 1, in which the attenuation means comprises an attenuation filter attenuating 0% to 100% uniformly across the exciting light source for example a pair of optical wedge filters.

7. A simplified and improved method of quantizing fluorescence emitted from a target sample, including an Immuno Fluorescent Assay sample, utilizing:
a fluorescent microscope;
a fluorescent exciting light source feeding into said microscope;
a variable optical attenuator intercepting the exciting light source over the wavelength of 360 to 500 nm prior to the microscope;
a control unit comprising:
microprocessor circuitry providing for discrete steps of the degree of attenuation, and for repeatable control of the degree of attenuation;
automatic display providing numerical readout of the degree of attenuation; and
retrievable memory of the numerical readout;
an adjustment pad comprising:
attenuator control switch;
reset switch; and
lock button; and
a standardized control slide bearing a plurality of control phenomena of known fluorescence;
said method comprising the steps of
preparing the target slide by industry standard means;
visually examining the target slide through the microscope;
adjusting the attenuator control switch until fluorescence of a portion of the slide disappears;
pressing the lock button to place the readout in memory;
optionally pressing the reset switch to remove the attenuation;
optionally repeating the above steps with a plurality of target slides;
repeating the appropriate portions of this method to measure the fluorescence of each of the phenomena on the standardized control slide, that is: visually examining; adjusting the attenuator; and pressing the lock button;
using said standardized fluorescence readouts to normalize the numerical readout of each target slide.

8. A method as claimed in claim 7, in which the microprocessor circuitry provides for a choice of the fineness of the discrete steps of the attenuation, and further in which the attenuation control switch comprises a switch for mailing said choice.

9. A method as claimed in claim 7, in which after the lock button is pressed, the attenuator control switch is adjusted until fluorescence of a different portion of the slide disappears, and further in which the lock button is then pressed again to replace an additional readout in memory.

10. A method as claimed in claim 7, in which the attenuator provides uniform attenuation across the exciting light path or in which the attenuator is a pair of adjustable variable density wedge filters.

11. A method as claimed in claim 7, in which the target and control slides are Anti Nuclear Antibody slides bearing HEP-2 cells.

12. A method as claimed in claim 7, in which the control slide, or a series of control slides, is examined before the target slides and the normalization is performed automatically and incorporated in the numerical readouts for each target slide.

13. A simplified and improved method for quantizing fluorescence emitted from a target Anti Nuclear Antibody slide bearing HEP-2 cells utilizing;
a fluorescent microscope selected from the group manufactured by Nikon™, Leitz™, Zeiss™,American Optical™, and Bausch and Lomb™.
a fluorescent exciting light source feeding into said microscope; a variable optical attenuator intercepting the exciting light source prior to the microscope; said attenuator comprising:
dual adjustable variable density filters traversing in opposing directions to provide a uniform attenuation across the exciting light path; said filters operating over the wavelength of 360 to 500 nm;
electronic stepper motor and belt drive mechanism to move said filters;
a control unit comprising:
microprocessor circuitry providing for filter motion in discrete steps and repeatable positional control;
electronic display providing numerical readout of the filter positional information; and
retrievable memory of the numerical readout;
an adjustment pad comprising:
filter control switch electrically communicating with said microprocessor circuitry to provide positional filter control;
reset switch to move filters back to minimum optical attenuation position from any filter position; and
a lock button electrically communicating with the filter positional information in the control unit and with the retrievable memory; and
a standardized control Anti Nuclear Antibody slide bearing control phenomena of known fluorescence;
said method comprising the steps of:
preparing the target slide by industry standard means;
visually examining the target slide through the microscope;
adjusting the filter control switch until fluorescence of a portion of the slide disappears;
pressing the lock button to place the readout in memory;
optionally adjusting the filter control switch until fluorescence of a different portion of the slide disappears and pressing the lock button to place a different readout in memory;
optionally pressing the reset switch to remove the filters;
optionally repeating the above steps with a plurality of target slides;
repeating the above steps with each of the phenomena on the standardized control slide;
using the numerical readout said control slide phenomena to obtain a a numerical standardization curve;
using said curve to normalize the numerical readout of each target slide.

14. A method as claimed in claim 13, in which the phenomena are examined before the target slides, and the normalization is performed automatically and incorporated in the numerical readouts of each target slide.

15. A method as claimed in claim 13, in which the microprocessor circuitry provides for a choice of the fineness of the discrete steps of the attenuation, and further in which the attenuation control switch additionally comprises a switch for making said choice; and further in which said choice of the fineness of the discrete steps of the attenuation, and further in which the attenuation control switch additionally comprises a switch for making said choice; and further in which said choice is made from the group containing at least 5; 10; and 20 steps when the attenuation is not computer-controlled; and from the group containing at least 5; 10; 20; and 100 steps when the attenuation is computer-controlled.
